# EUROPEAN PATENT APPLICATION

(11) **EP 4 685 361 A1**
(43) Date of publication of application: **28.01.2026**
(21) Application number: 24774443.6
(22) Date of filing: 29.01.2024
(51) Int. Cl.: F16C 33/64, C21D 9/40, C22C 38/00, C22C 38/18, F16C 19/06, F16C 33/32, F16C 33/58

(54) **ROLLING MEMBER AND ROLLING BEARING**

(30) Priority: 22.03.2023 JP 2023045085
(71) Applicant: NTN Corporation, Osaka-shi Osaka 530-0005 (JP)
(72) Inventor: MIZUTA, Kohei, Kuwana-shi, Mie 511-0867 (JP); FUJIMURA, Naoki, Kuwana-shi, Mie 511-0867 (JP)
(74) Representative: Bockhorni & Brüntjen Partnerschaft Patentanwälte mbB
(86) International application number: PCT/JP2024/002584
(87) International publication number: WO 2024/195297

(57) **Abstract**

A rolling member has a surface and is made of steel subjected to quenching and tempering, and includes a nitriding layer formed at the surface. A nitrogen concentration at the surface is 0.20 mass percent or more. A carbon concentration at the surface is 0.70 mass percent or more and 1.5 mass percent or less. A hardness at the surface is 820 Hv or more and 1000 Hv or less. An amount of retained austenite at the surface is 20 volume percent or less.

## Description

### TECHNICAL FIELD

The present invention relates to a rolling member and a rolling bearing.

### BACKGROUND ART

A rolling bearing used for a main shaft of a machine tool or the like is directly linked to processing accuracy of the machine tool, and thus is required to have a high dimensional stability. A raceway member and a rolling element constituting the rolling bearing are made of steel subjected to quenching and tempering. That is, the metal structure of the steel constituting the raceway member and the rolling element contains retained austenite.

When the temperature of the rolling bearing rises during use, retained austenite is decomposed, and dimensional change of the raceway member and the rolling element occurs due to volume expansion associated with decomposition of retained austenite. It should be noted that dimensional change of the raceway member and the rolling element causes occurrence of creep, an increase in contact surface pressure associated with a decrease in a gap between a raceway surface and the rolling element, early damage due to the increase in contact surface pressure, occurrence of abnormal noise and vibration, and the like.

Further, a decrease in dimensional stability of the rolling bearing is caused not only by a change in structure but also by wear or surface damage (smearing, peeling, and the like).

Japanese Patent Laying-Open No. 2001-099163 (PTL 1) describes a bearing ring of a rolling bearing. Japanese Patent Laying-Open No. 2006-322017 (PTL 2) describes a rolling element of a rolling bearing.

Japanese Patent Laying-Open No. 2004-232858 (PTL 3) describes a bearing ring of a rolling bearing. Japanese Patent Laying-Open No. 2004-339575 (PTL 4) describes a bearing ring of a rolling bearing. In the bearing ring described in PTL 4, a hardness at a surface is improved by performing shot peening on the surface.

Japanese Patent Laying-Open No. 2017-088958 (PTL 5), Japanese Patent Laying-Open No. 2022-073906 (PTL 6), and Japanese Patent Laying-Open No. 2022-108242 (PTL 7) each describe a rolling member. In the rolling member described in each of PTL 5, PTL 6, and PTL 7, molybdenum-based nitrides, vanadium-based nitrides, or chromium-molybdenum-vanadium-based nitrides are precipitated in a superficial layer. Japanese Patent Laying-Open No. 2016-108616 (PTL 8) describes a bearing ring of a rolling bearing. In the bearing ring in PTL 8, silicon-manganese-based nitrides are precipitated in a superficial layer.

### CITATION LIST

### PATENT LITERATURE

PTL 1: Japanese Patent Laying-Open No. 2001-099163
PTL 2: Japanese Patent Laying-Open No. 2006-322017
PTL 3: Japanese Patent Laying-Open No. 2004-232858
PTL 4: Japanese Patent Laying-Open No. 2004-339575
PTL 5: Japanese Patent Laying-Open No. 2017-088958
PTL 6: Japanese Patent Laying-Open No. 2022-073906
PTL 7: Japanese Patent Laying-Open No. 2022-108242
PTL 8: Japanese Patent Laying-Open No. 2016-108616

### SUMMARY OF INVENTION

### TECHNICAL PROBLEM

Since the bearing ring described in PTL 1 has a low hardness (less than 752 Hv) at a surface, there is a concern that dimensional stability may decrease due to wear or surface damage. Since the rolling element described in PTL 2 has a large amount of retained austenite (more than 20 volume percent), there is a concern that dimensional stability may decrease in association with decomposition of retained austenite during use.

The bearing ring described in PTL 3 has a large dimensional change rate, although it has been held at a low constant temperature for a short time. In the bearing ring described in PTL 4, a step other than heat treatment is required to improve the hardness at the surface. In the rolling member described in each of PTL 5, PTL 6, and PTL 7, it is necessary to add molybdenum or vanadium to steel constituting the rolling member, which leads to an increase in steel cost.

In a rolling bearing for a machine tool, a ceramic ball made of silicon nitride or the like may be used as a rolling element. In the bearing ring in PTL 8, since surface energy of silicon-manganese-based nitrides is close to surface energy of silicon nitride, surface damage is likely to occur when a ceramic ball as described above is used as a rolling element.

The present invention has been made in view of the problems of the conventional techniques as described above. More specifically, the present invention provides a rolling member capable of improving dimensional stability.

### SOLUTION TO PROBLEM

A rolling member of the present invention has a surface and is made of steel subjected to quenching and tempering, and includes a nitriding layer formed at the surface. A nitrogen concentration at the surface is 0.20 mass percent or more. A carbon concentration at the surface is 0.70 mass percent or more and 1.5 mass percent or less. A hardness at the surface is 820 Hv or more and 1000 Hv or less. An amount of retained austenite at the surface is 20 volume percent or less. A dislocation density of retained austenite at the surface and a dislocation density of martensite at the surface are 2.0×10¹⁴ m⁻² or more and 1.3×10¹⁵ m⁻² or more, respectively.

### ADVANTAGEOUS EFFECTS OF INVENTION

According to the rolling member of the present invention, it is possible to improve dimensional stability.

### BRIEF DESCRIPTION OF DRAWINGS

Fig. 1 is a cross sectional view of a rolling bearing 100.
Fig. 2 is a diagram of a process for manufacturing rolling bearing 100.

### DESCRIPTION OF EMBODIMENTS

An embodiment of the present invention will be described with reference to the drawings. In the drawings below, identical or corresponding parts will be designated by the same reference numerals, and redundant description will not be repeated. A rolling bearing according to the embodiment is referred to as a rolling bearing 100.

### (Configuration of Rolling Bearing 100)

Hereinafter, a configuration of rolling bearing 100 will be described.

Rolling bearing 100 is a rolling bearing for a machine tool, for example. However, the application of rolling bearing 100 is not limited thereto. Rolling bearing 100 may be a rolling bearing for an electric axle. It should be noted that the electric axle is a unit having a triaxial structure constituted by a drive motor, a speed reducer, an inverter, and the like, for example. The rolling bearing for the electric axle is required to have not only dimensional stability but also resistance to foreign matter and a high load capacity.

Rolling bearing 100 may be a rolling bearing for an electric brake. It should be noted that the electric brake is a unit constituted by a motor, a reduction gear, a ball screw, a cylinder, a control device, and the like, for example. The rolling bearing for the electric brake is required to have not only dimensional stability but also resistance to foreign matter and a high load capacity.

Rolling bearing 100 may be a rolling bearing for an electric compressor. The electric compressor is a unit that cools a room, and cools a battery and in-vehicle electronic devices which tend to have a high temperature. The rolling bearing for the electric compressor is required to have not only dimensional stability but also resistance to foreign matter and a high load capacity.

The present embodiment is also applicable to mechanical components other than the rolling bearing. For example, the present embodiment is also applicable to a ball screw used in a transmission, an electric actuator, a positioning device, an electric jack, a servo cylinder, a mechanical press machine, an electric servo press machine, an electric putter steering, and an electric injection molding machine, a gear, a spindle, and a shaft for an electric axle, a ball screw for an electric brake, and the like. These mechanical components are also required to have not only dimensional stability but also resistance to foreign matter and a high load capacity. It should be noted that the ball screw is a mechanical component constituted by a shaft, a nut (an outer ring), a rolling element (ball) disposed between a raceway surface of the shaft and a raceway surface of the nut, a tube, a deflector, an end cap, and the like.

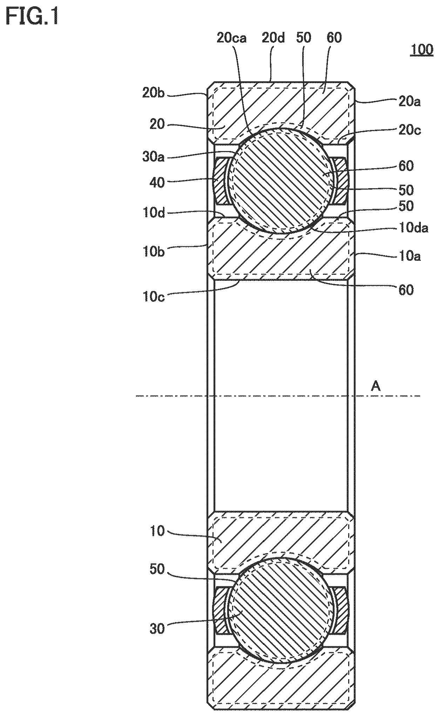

Fig. 1 is a cross sectional view of a rolling bearing 100. As shown in Fig. 1, rolling bearing 100 has an inner ring 10, an outer ring 20, a plurality of rolling elements 30, and a cage 40. A central axis of inner ring 10 is defined as a central axis A. A direction of central axis A is defined as an axial direction. A direction along a circumference centered on central axis A when viewed along the axial direction is defined as a circumferential direction. A direction which passes through central axis A and is orthogonal to central axis A is defined as a radial direction.

Inner ring 10 has an annular shape extending in the circumferential direction. Inner ring 10 has a width surface 10a, a width surface 10b, an inner diameter surface 10c, and an outer diameter surface 10d. Width surface 10a and width surface 10b are end surfaces of inner ring 10 in the axial direction. Width surface 10a faces one side in the axial direction (the right side in Fig. 1). Width surface 10b is a surface opposite to width surface 10b in the axial direction, and faces the other side in the axial direction (the left side in Fig. 1).

Inner diameter surface 10c and outer diameter surface 10d extend in the circumferential direction. Inner diameter surface 10c faces an inner side in the radial direction. Outer diameter surface 10d faces an outer side in the radial direction. That is, outer diameter surface 10d is a surface opposite to inner diameter surface 10c in the radial direction. One end and the other end of inner diameter surface 10c in the axial direction are contiguous to width surface 10a and width surface 10b, respectively. One end and the other end of outer diameter surface 10d in the axial direction are contiguous to width surface 10a and width surface 10b, respectively.

Inner ring 10 is fitted to a shaft (not shown) at inner diameter surface 10c. Outer diameter surface 10d has a raceway surface 10da. Raceway surface 10da contacts rolling elements 30. Raceway surface 10da extends in the circumferential direction. Outer diameter surface 10d is recessed toward inner diameter surface 10c at raceway surface 10da. Raceway surface 10da is located at a central portion of outer diameter surface 10d in the axial direction. Raceway surface 10da has a partial arc shape, for example, in a cross sectional view orthogonal to the circumferential direction.

Outer ring 20 has an annular shape extending in the circumferential direction. Outer ring 20 has a width surface 20a, a width surface 20b, an inner diameter surface 20c, and an outer diameter surface 20d. Width surface 20a and width surface 20b are end surfaces of outer ring 20 in the axial direction. Width surface 20a faces the one side in the axial direction (the right side in Fig. 1). Width surface 20b is a surface opposite to width surface 20b in the axial direction, and faces the other side in the axial direction (the left side in Fig. 1).

Inner diameter surface 20c and outer diameter surface 20d extend in the circumferential direction. Inner diameter surface 20c faces the inner side in the radial direction. Outer diameter surface 20d faces the outer side in the radial direction. That is, outer diameter surface 20d is a surface opposite to inner diameter surface 20c in the radial direction. One end and the other end of inner diameter surface 20c in the axial direction are contiguous to width surface 20a and width surface 20b, respectively. One end and the other end of outer diameter surface 20d in the axial direction are contiguous to width surface 20a and width surface 20b, respectively.

Outer ring 20 is fitted to a housing (not shown) at outer diameter surface 20d. Inner diameter surface 20c has a raceway surface 20ca. Raceway surface 20ca contacts rolling elements 30. Raceway surface 20ca extends in the circumferential direction. Inner diameter surface 20c is recessed toward outer diameter surface 20d at raceway surface 20ca. Raceway surface 20ca is located at a central portion of inner diameter surface 20c in the axial direction. Raceway surface 20ca has a partial arc shape, for example, in a cross sectional view orthogonal to the circumferential direction. Outer ring 20 is disposed on the outer side in the radial direction of inner ring 10 such that raceway surface 20ca faces raceway surface 10da with a space therebetween in the radial direction.

Rolling elements 30 have a spherical shape. Rolling elements 30 are disposed between raceway surface 10da and raceway surface 20ca. Each rolling element 30 has a surface 30a. Surface 30a contacts raceway surface 10da and raceway surface 20ca. The plurality of rolling elements 30 are arranged in the circumferential direction. Cage 40 is disposed between outer diameter surface 10d and inner diameter surface 20c. Cage 40 holds the plurality of rolling elements 30 such that a spacing between two adjacent rolling elements 30 is within a certain range.

Inner ring 10, outer ring 20, and rolling elements 30 are made of steel subjected to quenching and tempering. The steel constituting inner ring 10, outer ring 20, and rolling elements 30 preferably has a composition shown in Table 1. It should be noted that SUJ2, which is a high carbon chromium bearing steel defined in the JIS standard, falls within the range of composition shown in Table 1.

### [Table 1]

**Table 1**

| C (mass %) | Si (mass %) | Mn (mass %) | S (mass %) | Cr (mass %) | Remainder |
|---|---|---|---|---|---|
| 0.95 or more and 1.10 or less | less than 0.30 | less than 0.50 | less than 0.0080 | 1.4 or more and 1.6 or less | Fe and inevitable impurities |

A nitriding layer 50 is formed at each of a surface of inner ring 10, a surface of outer ring 20, and the surface (surface 30a) of rolling element 30. In nitriding layer 50, nitrogen is dissolved in the steel. Further, in nitriding layer 50, chromium-based nitrides are precipitated in the steel. A portion of each of inner ring 10, outer ring 20, and rolling element 30 located at a position farther away from the surface than nitriding layer 50 is referred to as a core portion 60. That is, the portion of each of inner ring 10, outer ring 20, and rolling element 30 other than nitriding layer 50 is core portion 60. In core portion 60, nitrogen is not dissolved in the steel, and chromium-based nitrides are not precipitated in the steel.

Preferably, in a cross sectional view orthogonal to each of the surfaces of inner ring 10, outer ring 20, and rolling element 30, in nitriding layer 50, a total of five or more chromium-based nitrides having a grain diameter of 1.0 µm or less are present per 100 µm², and an area ratio of the chromium-based nitrides in nitriding layer 50 is 0.95 percent or more and 10 percent or less.

The area ratio of the chromium-based nitrides is calculated by acquiring a cross sectional image of nitriding layer 50 at a magnification of 4000 times using a field emission scanning electron microscope (FE-SEM), binarizing the cross sectional image, and performing image processing on the binarized cross sectional image. It should be noted that the cross sectional image of nitriding layer 50 is acquired in three or more fields of view, and the area ratio is an average value in those plurality of cross sectional images.

The grain diameter of each chromium-based nitride is obtained by acquiring an area of each chromium-based nitride using the same method as that described above, dividing the area by π, and multiplying a square root of a value obtained by the division by 2. The number of chromium-based nitrides having a grain diameter of 1.0 µm or less per 100 µm² is calculated by counting the number of chromium-based nitrides having a grain diameter of 1.0 µm or less in a cross sectional image specified by the same method as that described above, and using an area of the cross sectional image.

A nitrogen concentration at each of the surface of inner ring 10, the surface of outer ring 20, and the surface of rolling element 30 is 0.20 mass percent or more. The nitrogen concentration at each of the surface of inner ring 10, the surface of outer ring 20, and the surface of rolling element 30 may be 0.30 mass percent or more. A carbon concentration at each of the surface of inner ring 10, the surface of outer ring 20, and the surface of rolling element 30 may be 0.70 mass percent or more and 1.5 mass percent or less. The carbon concentration at each of the surface of inner ring 10, the surface of outer ring 20, and the surface of rolling element 30 may be 0.70 mass percent or more and 0.95 mass percent or less. It should be noted that the nitrogen concentration and the nitrogen concentration described above are measured using an electron probe micro analyzer (EPMA).

A hardness at each of the surface of inner ring 10, the surface of outer ring 20, and the surface of rolling element 30 is 820 Hv or more and 1000 Hv or less. The hardness at each of the surface of inner ring 10, the surface of outer ring 20, and the surface of rolling element 30 is measured by the Vickers hardness test method defined in the JIS standard (JIS Z 2244:2009). A load in measuring the hardness is set to 300 g, and an average value of hardnesses measured at three or more positions is adopted.

When it is difficult to measure the hardness at each of the surface of inner ring 10, the surface of outer ring 20, and the surface of rolling element 30, a hardness at a position with a depth of 50 µm from each of the surface of inner ring 10, the surface of outer ring 20, and the surface of rolling element 30 in a cross section is measured. The hardness measured in this manner is also 820 Hv or more and 1000 Hv or less.

An amount of retained austenite at each of the surface of inner ring 10, the surface of outer ring 20, and the surface of rolling element 30 is 20 volume percent or less. An amount of retained austenite at core portion 60 is 0.1 volume percent or more and 9 volume percent or less, for example. It should be noted that the amounts of retained austenite described above are measured by an X-ray diffraction method. On this occasion, a chromium tube type X-ray diffractometer is used. In the chromium tube type X-ray diffractometer, a wavelength of Cr-Kα rays is set to 2.29093×10⁻¹⁰ m, a tube voltage is set to 30 kV, a tube current is set to 10 mA, and a collimator size is set to 2 mm×2 mm. When the amount of retained austenite at core portion 60 is measured, a test piece is preferably electropolished such that retained austenite is not subjected to processing-induced transformation.

A dislocation density of retained austenite at each of the surface of inner ring 10, the surface of outer ring 20, and the surface of rolling element 30 is 2.0×10¹⁴ m⁻² or more. A dislocation density of martensite at each of the surface of inner ring 10, the surface of outer ring 20, and the surface of rolling element 30 is 1.3×10¹⁵ m⁻² or more. A dislocation density of retained austenite at core portion 60 of each of inner ring 10, outer ring 20, and rolling element 30 is preferably 4.5×10¹⁴ m⁻² or more.

The dislocation density of retained austenite and the dislocation density of martensite are measured using a cobalt tube type X-ray diffractometer. More specifically, firstly, X-ray profiles of austenite and martensite are measured using the cobalt tube type X-ray diffractometer. On this occasion, in the cobalt tube type X-ray diffractometer, a wavelength of Co-Kα rays is set to 1.7889×10⁻¹⁰ m, a tube voltage is set to 40 kV, a tube current is set to 50 mA, and a collimator size is set to a diameter of 1 mm. The X-ray profiles of austenite and martensite are measured in a range where 20 is 30° or more and 135° or less.

Secondly, Rietveld analysis is performed, and then a half-value width of a peak in each of the X-ray profiles of martensite and austenite obtained by X-ray diffraction is separated into a crystallite size and strain. Thirdly, the separated crystallite size and strain are applied to a Williamson-Hall equation to obtain a dislocation density of martensite and a dislocation density of austenite. The Williamson-Hall equation is expressed by ρ = 14.4×ε²/b², where ρ represents the dislocation density (unit: m⁻²), ε represents the strain, and b represents a length of a Burgers vector (b = 0.25×10⁻⁹ m).

In the X-ray profile of martensite obtained by X-ray diffraction, peaks of a {110} plane, a {200} plane, a {211} plane, and a {220} plane are to be measured. In the X-ray profile of austenite, peaks of a {111} plane, a {200} plane, a {220} plane, a {311} plane, and a {222} plane are to be measured. Rietveld analysis is performed above in order to reduce influence of the {200} plane of martensite and the {200} plane of austenite having different elastic moduli.

A dimensional change rate of each of inner ring 10, outer ring 20, and rolling element 30 after holding at 160°C for 2500 hours is performed is 40×10⁻⁵ or less. The dimensional change rate of each of inner ring 10, outer ring 20, and rolling element 30 after the holding at 160°C for 2500 hours is performed is preferably 15×10⁻⁵ or less. The dimensional change rate is calculated by subtracting a dimension of inner ring 10 (outer ring 20, rolling element 30) before the holding from a dimension of inner ring 10 (outer ring 20, rolling element 30) after the holding, and dividing a value obtained by the subtraction by the dimension of inner ring 10 (outer ring 20, rolling element 30) before the holding.

### (Method for Manufacturing Rolling Bearing 100)

Hereinafter, a method for manufacturing rolling bearing 100 will be described.

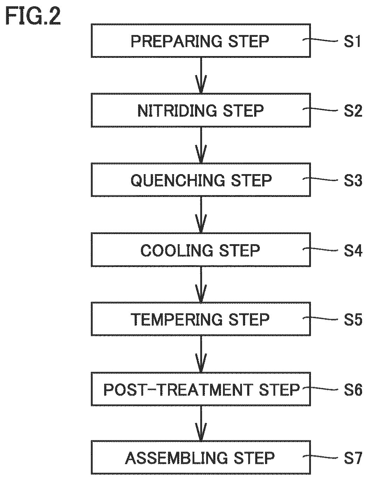

Fig. 2 is a diagram of a process for manufacturing rolling bearing 100. As shown in Fig. 2, the method for manufacturing rolling bearing 100 has a preparing step S1, a nitriding step S2, a quenching step S3, a cooling step S4, a tempering step S5, a post-treatment step S6, and an assembling step S7.

In preparing step S1, members to be processed are prepared. The member to be processed for forming inner ring 10 or outer ring 20 has an annular shape. The member to be processed for forming rolling element 30 has a spherical shape. The members to be processed are made of steel having the composition shown in Table 1.

In nitriding step S2, nitriding treatment for the members to be processed is performed. The nitriding treatment for the members to be processed is performed by heating and holding the members to be processed in an atmospheric gas containing a nitrogen source. A heating temperature and a nitrogen concentration in the atmospheric gas in nitriding step S2 are set such that no compound layer is formed at a surface of each member to be processed. By performing nitriding step S2, nitrogen enters the inside from the surface of each member to be processed. As a result, nitrogen is dissolved in each member to be processed, at a superficial layer portion of the member to be processed, and chromium-based nitrides are precipitated at the superficial layer portion of the member to be processed. Nitriding step S2 is performed such that nitrogen reaches the inside of positions which will be the surfaces of inner ring 10, outer ring 20, and rolling element 30 after post-treatment step S6 is performed. In nitriding step S2, a component of the atmospheric gas may be adjusted to adjust a carbon concentration at the superficial layer portion of the member to be processed to be lower than a carbon concentration in the steel constituting the member to be processed. Preferably, this adjustment is performed such that a carbon concentration at the positions which will be the surfaces of the objects to be processed after post-treatment step S6 is 0.70 mass percent or more and 0.95 mass percent or less. When the carbon concentration is lower than that of a base material, undissolved carbides are reduced. As a result, chromium in the undissolved carbides diffuses into the base material, and chromium-based nitrides are likely to be precipitated.

In quenching step S3, quenching for the members to be processed is performed. The quenching for the members to be processed is performed by heating and holding the members to be processed at a temperature equal to or higher than an A₁ transformation point of the steel constituting the members to be processed, and then cooling the members to be processed to a temperature equal to or lower than an M_{S} transformation point of the steel constituting the members to be processed. By performing quenching step S3, martensite and retained austenite are generated in the steel constituting the members to be processed. It should be noted that, after quenching step S3 is performed, quenching step S3 may be repeated by heating the members to be processed again to the temperature equal to or higher than the A₁ transformation point. By performing quenching step S3 a plurality of times, crystal grains are refined, and the effect in cooling step S4 is improved.

In cooling step S4, sub-zero treatment for the members to be processed is performed. Further, in cooling step S4, cryogenic treatment (super sub-zero treatment) for the members to be processed may be performed. In the sub-zero treatment, the members to be processed are cooled to a temperature of higher than -100°C and equal to or lower than room temperature. In the cryogenic treatment, the members to be processed are cooled to a temperature equal to or lower than -100°C. By performing cooling step S4, a part of retained austenite in the steel constituting the members to be processed is transformed into martensite. It should be noted that, before cooling step S4 is performed, a low-temperature tempering step for preventing cracking, or a cleaning step may be performed.

In tempering step S5, tempering for the members to be processed is performed. The tempering for the members to be processed is performed by heating the members to be processed to a temperature lower than the A₁ transformation point of the steel constituting the members to be processed. More specifically, the tempering for the members to be processed is performed by heating the members to be processed to a temperature of about 180°C. In post-processing step S6, machining such as grinding and polishing is performed on the surfaces of the members to be processed. Thereby, inner ring 10, outer ring 20, and rolling elements 30 are manufactured.

It should be noted that, when the members to be processed are heated at a temperature of 180°C or higher in tempering step S5, as the heating temperature becomes higher, the dislocation density of martensite decreases, and the hardness decreases. On the other hand, when cooling step S4 is performed, the dislocation density of martensite is less likely to decrease by the heating in tempering step S5. Thus, although the hardness decreases as the heating temperature rises, a hardness higher than usual is obtained.

In assembling step S7, inner ring 10, outer ring 20, and rolling elements 30 are assembled together with cage 40. Thereby, rolling bearing 100 is manufactured.

Although the case where nitriding layer 50 is formed at all of the surface of inner ring 10, the surface of outer ring 20, and the surface of rolling element 30 has been described above as an example, it is only necessary that nitriding layer 50 is formed at at least one of the surface of inner ring 10, the surface of outer ring 20, and the surface of rolling element 30.

### (Effect of Rolling Bearing 100)

Hereinafter, the effect of rolling bearing 100 will be described.

It is conceivable to decrease the amount of retained austenite by performing tempering at a high temperature, as a measure for suppressing temporal dimensional change in a bearing ring or a rolling element made of steel subjected to quenching and tempering. However, when the tempering at a high temperature is performed, although it is possible to suppress temporal dimensional change in association with a decrease in the amount of retained austenite, the hardness of the steel at a surface of the bearing ring or the rolling element decreases. When the hardness of the steel at the surface decreases, resistance to surface damage may decrease.

Since the sub-zero treatment or the cryogenic treatment is performed on inner ring 10, outer ring 20, and rolling elements 30, the amount of retained austenite in the steel decreases. Since the sub-zero treatment or the cryogenic treatment is performed on inner ring 10, outer ring 20, and rolling elements 30, the dislocation density of martensite in the steel increases, and as a result, the dislocation density of retained austenite in the steel also increases. Accordingly, in the steel constituting inner ring 10, outer ring 20, and rolling elements 30, there occurs a state in which retained austenite is surrounded by martensite having a high dislocation density, and even if retained austenite in the steel is decomposed due to a temperature rise associated with the use of rolling bearing 100, volume expansion associated with the decomposition is constrained by martensite having a high dislocation density around the periphery thereof, and thus, dimensional change is less likely to occur. In this manner, in inner ring 10, outer ring 20, and rolling elements 30, dimensional stability against a temperature rise associated with use is ensured.

The tempering at a high temperature is not performed on inner ring 10, outer ring 20, and rolling elements 30, and progress of decomposition of martensite at the surface of each of inner ring 10, outer ring 20, and rolling element 30 is minor. Further, the nitrogen concentration at the surface of each of inner ring 10, outer ring 20, and rolling element 30 is 0.2 mass percent or more, and the hardness increases due to solid-solution strengthening at the surface of each of inner ring 10, outer ring 20, and rolling element 30. As a result, the hardness of the steel at the surface of each of inner ring 10, outer ring 20, and rolling element 30 is 820 Hv or more and 1000 Hv or less. Accordingly, in inner ring 10, outer ring 20, and rolling elements 30, dimensional stability against surface damage or wear is ensured.

It should be noted that a high residual compressive stress may be applied to the surface of rolling element 30 by a pressurizing step, and an indentation is less likely to be formed thereon than on the surface of the bearing ring (inner ring 10, outer ring 20). Accordingly, even when only the bearing ring (inner ring 10, outer ring 20) is used as a rolling member according to the present embodiment, rolling bearing 100 has an improved resistance to surface damage.

### (Evaluation of Dimensional Stability)

Samples A to J were prepared in order to evaluate dimensional stability. For samples A to J, SUJ2, which is a high carbon chromium bearing steel defined in the JIS standard, was used. In samples A to J, characteristics at the surface and characteristics at the core portion were changed as shown in Table 2.

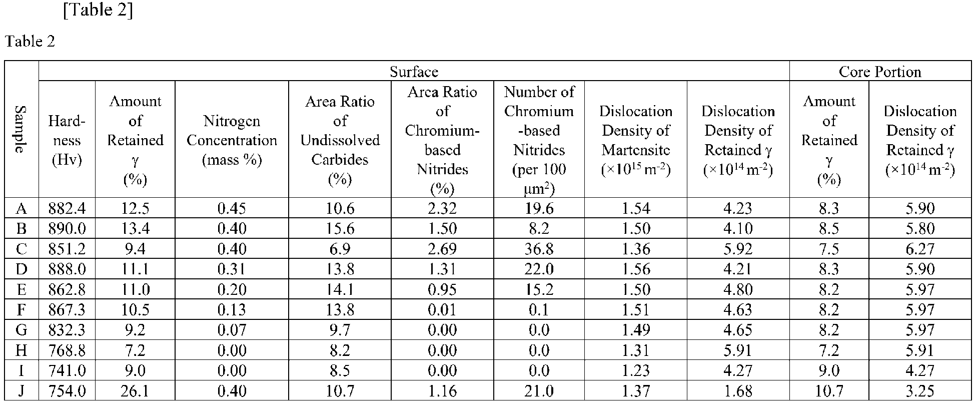

It should be noted that the nitrogen concentration and the state of precipitation of chromium-based nitrides at the surface of each sample were adjusted by changing a ratio of a gas component in the atmosphere, a heating time, and a holding temperature in nitriding step S2. Further, the dislocation density of retained austenite at the surface, the dislocation density of martensite at the surface, the amount of retained austenite at the surface, and the dislocation density of retained austenite at core portion 60 of each sample were adjusted by changing a cooling temperature and a holding time in the sub-zero treatment or the cryogenic treatment.

In sample A and samples D to G, nitriding step S2 was performed, and then quenching step S3 was performed. Further, in sample A and samples D to G, the cryogenic treatment was subsequently performed as cooling step S4, and then tempering at 180°C was performed in tempering step S5. In sample A and samples D to G, a material of the surface was adjusted by adjusting a grinding allowance of each test piece. Accordingly, the amount of retained austenite and the dislocation density of retained austenite at core portion 60 were substantially the same in sample A and samples D to G.

In samples B and C, nitriding step S2 was performed, and then quenching step S3 was performed. Further, in samples B and C, the cryogenic treatment was subsequently performed as cooling step S4, and then tempering at 180°C was performed in tempering step S5. It should be noted that, in samples B and C, the amount of undissolved carbides was adjusted by adjusting a concentration of the atmospheric gas in nitriding step S2.

In sample H, quenching step S3 was performed under standard conditions, and then the cryogenic treatment was performed as cooling step S4. Further, in sample H, tempering at 180°C was subsequently performed in tempering step S5. In sample I, quenching step S3 was performed under standard conditions, and then tempering at 180°C was performed in tempering step S5. In sample J, nitriding step S2 was performed, and then quenching step S3 was performed. Further, in sample J, tempering at 180°C was subsequently performed in tempering step S5.

### <Wear Resistance Test>

In a wear resistance test, each sample was formed into a block shape having a length of 20 mm, a width of 10 mm, and a height of 5 mm. In each sample, a surface having a length of 20 mm and a width of 10 mm was mirror-polished so as to have an arithmetic mean roughness of 0.005 µm. In the wear resistance test, a rotating cylindrical member was pressed against the surface having a length of 20 mm and a width of 10 mm of each sample to apply a load of 50 N. The cylindrical member had an outer diameter of 40 mm, a width of 10 mm, and a sub-curvature of 60 mm. The cylindrical member was made of SUJ2, had a hardness of 760 Hv at a surface, and had an arithmetic mean roughness of 0.01 µm at the surface. A maximum contact surface pressure between the cylindrical member and each sample was 0.5 GPa. A space between the cylindrical member and each sample was lubricated with Velocity oil No. 3 (ISO VG2) manufactured by Mobil, using a felt pad.

The cylindrical member had a rotation speed of 24.5 rotations per minute, and the cylindrical member was rotated for 60 minutes. After the cylindrical member was rotated for 60 minutes, a maximum depth of a wear mark on the surface of each sample was measured by a laser microscope, to evaluate wear resistance of each sample. Table 3 shows results of the wear resistance test.

### [Table 3]

**Table 3**

| Sample | Wear Depth (µm) | Determination |
|---|---|---|
| A | 0.27 | OK |
| B | 0.30 | OK |
| C | 0.48 | OK |
| D | 0.48 | OK |
| E | 0.49 | OK |
| F | 0.89 | NG |
| G | 1.16 | NG |
| H | 1.58 | NG |
| I | 1.76 | NG |
| J | 0.47 | NG |

As shown in Table 3, samples A to E and sample J had a wear depth of 0.8 µm or less, and had a good wear resistance. It should be noted that, in samples A to E and sample J, the number of chromium-based nitrides having a grain diameter of 1.0 µm or less per 100 µm² was five or more, and an area ratio of the chromium-based nitrides was 0.95 percent or more. In samples H and J, wear resistance was not improved, because the cryogenic treatment was performed but the nitriding treatment was not performed. It should be noted that no particular relation was found between the area ratio of undissolved carbides and the wear resistance.

### <Evaluation Test of Temporal Dimensional Change>

In an evaluation test of temporal dimensional change, each sample was formed into an annular shape having an inner diameter of 54 mm, an outer diameter of 60 mm, and a width of 15 mm. In the evaluation test of temporal dimensional change, each sample was held at a constant temperature of 160°C for 2500 hours, to measure a dimensional change rate of the outer diameter before and after the holding at the constant temperature. Table 4 shows results of the evaluation test of temporal dimensional change.

### [Table 4]

**Table 4**

| Sample | Dimensional Change Rate after Holding at 160°C for 2500 Hours (×10⁻⁵) | Determination |
|---|---|---|
| A | 6.5 | OK |
| B | 7.0 | OK |
| C | 30.0 | OK |
| D | 5.8 | OK |
| E | 4.2 | OK |
| F | 4.0 | OK |
| G | 3.4 | OK |
| H | 17.2 | OK |
| I | 69.0 | NG |
| J | 121.1 | NG |

As shown in Table 4, in samples A to H, the dimensional change rate after the holding at a constant temperature of 160°C for 2500 hours was 40×10⁻⁵ or less. In particular, sample A, sample B, and samples D to G had high dislocation densities of martensite and retained austenite, and exhibited a lower dimensional change rate after the holding at the constant temperature.

A condition that the nitrogen concentration at the surface is 0.2 mass percent or more is defined as a condition A. A condition that the hardness at the surface is 820 Hv or more is defined as a condition B. A condition that the amount of retained austenite at the surface is less than 20 volume percent is defined as a condition C. A condition that the dislocation density of martensite at the surface is 2.0×10¹⁴ m⁻² or more is defined as a condition D. A condition that the dislocation density of martensite at the surface is 1.3×10¹⁵ m⁻² or more is defined as a condition E.

In samples A to E, all of conditions A to E were satisfied. On the other hand, in samples F to J, at least any of conditions A to E was not satisfied. In samples A to E, both the wear resistance and the dimensional change rate after the holding at the constant temperature were good. On the other hand, in samples F to J, either the wear resistance or the dimensional change rate after the holding at the constant temperature was not good. From this comparison, it was experimentally revealed that, when conditions A to E are satisfied, both dimensional stability due to wear or surface damage and dimensional stability against a temperature rise associated with use are ensured.

Although the embodiment of the present invention has been described above, the above-described embodiment can be variously modified. Further, the scope of the present invention is not limited to the above-described embodiment. The scope of the present invention is defined by the scope of the claims, and is intended to include any modifications within the scope and meaning equivalent to the scope of the claims.

### REFERENCE SIGNS LIST

10: inner ring; 10a, 10b: width surface; 10c: inner diameter surface; 10d: outer diameter surface; 10da: raceway surface; 20: outer ring; 20a, 20b: width surface; 20c: inner diameter surface; 20ca: raceway surface; 20d: outer diameter surface; 30: rolling element; 30a: surface; 40: cage; 50: nitriding layer; 60: core portion; 100: rolling bearing; A: central axis; S1: preparing step; S2: nitriding step; S3: quenching step; S4: cooling step; S5: tempering step; S6: post-treatment step; S7: assembling step.

## Claims

1. A rolling member having a surface and made of steel subjected to quenching and tempering, the rolling member comprising:
a nitriding layer formed at the surface, wherein
a nitrogen concentration at the surface is 0.20 mass percent or more,
a carbon concentration at the surface is 0.70 mass percent or more and 1.5 mass percent or less,
a hardness at the surface is 820 Hv or more and 1000 Hv or less,
an amount of retained austenite at the surface is 20 volume percent or less, and
a dislocation density of retained austenite at the surface and a dislocation density of martensite at the surface are 2.0×10¹⁴ m⁻² or more and 1.3×10¹⁵ m⁻² or more, respectively.

2. The rolling member according to claim 1, wherein
chromium-based nitrides are precipitated in the nitriding layer, and
in a cross sectional view orthogonal to the surface, in the nitriding layer, a total of five or more chromium-based nitrides having a grain diameter of 1.0 µm or less are present per 100 µm², and an area ratio of the chromium-based nitrides in the nitriding layer is 0.95 percent or more and 10 percent or less.

3. The rolling member according to claim 1, further comprising a core portion located at a position farther away from the surface than the nitriding layer, wherein
a dislocation density of retained austenite at the core portion is 4.5×10¹⁴ m⁻² or more.

4. The rolling member according to claim 2, further comprising a core portion located at a position farther away from the surface than the nitriding layer, wherein
a dislocation density of retained austenite at the core portion is 4.5×10¹⁴ m⁻² or more.

5. A rolling bearing comprising:
a raceway member; and
a rolling element disposed in contact with the raceway member, wherein
at least one of the raceway member and the rolling element is the rolling member according to any one of claims 1 to 4.
